# EUROPEAN PATENT SPECIFICATION

(11) **EP 2 835 049 B1**
(45) Date of publication and mention of the grant of the patent: **07.12.2016**
(21) Application number: 14180080.5
(22) Date of filing: 06.08.2014
(51) Int. Cl.: A01L 7/02, A01L 15/00, A01K 13/00, A43B 13/18

(54) **Sole support pad for hoofed animals and process for producing the same**
Sohlenunterlage für Huftiere und Herstellungsverfahren dafür
Tampon de support de semelle pour ongulés et son procédé de production

(30) Priority: 06.08.2013 PH 2412013
(43) Date of publication of application: 11.02.2015
(73) Proprietor: Mangan, David J., Dingley Village, VIC 3172 (AU)
(72) Inventor: Mangan, David J., Dingley Village, VIC 3172 (AU)
(74) Representative: Fraser, Karen

(56) References cited:
- US-A1- 2012 279 184

## Description

### TECHNICAL FIELD OF THE INVENTION

The present invention relates to a sole support pad for hoofed animals, more particularly to a sole support pad for horses, with laminitis or other foot problems. Said sole support pad comprises a water-curable resin-coating expandable polystyrene balls. The invention further relates to a process for producing a sole support, and to the use of a sole support.

### BACKGROUND OF THE INVENTION

Severe pain the foot of horses with laminitis is generated by traction forces of the pedal bone on the lamellae connecting it to the hoof wall. In normal situations these lamellae are strong enough to deal with this traction. However, with inflammation of these lamellae, as in the case of laminitis, bearing weight i.e. traction of the deep digital flexor tendon attached to the pedal bone, becomes too much. These horses try to get as much weight off their feet as possible, resulting in the well know posture of "hanging backwards" in an attempt to get the pressure off their front feet. Apart from using medication to relief pain, reduce inflammation and to increase the microcirculation in the foot, in the acute phase a lot of effort is made to relief the traction in the lamellae by trying to make the heels and sole carry more weight. Some solutions are putting the horses in a supportive cast or put them on a soft surface that molds to the foot and supports the sole.

Especially at the acute phase a comfortable support of the sole, including the frog, is paramount. This can be done by putting the horse in a stable with wet sand, but this makes it very uncomfortable for the horse to lie down. Changing stables every few hours to make the horse lie down in dry bedding and putting it back on the sand is not very convenient and most horses are reluctant to move anyways because of the pain.

Sole support can be applied to the sole with or without shoes. It directly moulds to the foot and only needs a simple vettrap bandage to help it stay in place. Thus lifting of the foot and putting more weight on the other one while putting it under takes only seconds and it can easily be applied at the very painful start of the acute phase. Independent of the bedding/footing the horse has instantaneously comfortable support on the whole sole and frog. This helps to reduce the amount of weight bearing of the hoof wall and significantly decreases traction on the lamellae. It also provides some counter pressure at the location where the pedal bone might push the sole at the tip of the frog in case of rotation and/or sinking. Mechanically reducing the tension/stress at the level of the lamellae at the beginning of this derailment process helps to control the inflammation process and the amount of damage done to this vital part of the horse's feet.

Full support of sole and frog can also be beneficial for horses with low deep digital flexor tendor lesions or problems associated with the naviculair bone/bursa/ligaments. If the sole and frog are supported when the hoof hits the ground, less weight will be carried by the hoof wall itself, hence less traction in the lamellae, less
traction on the pedal bone, less traction on the complex structure of daft, naviculair bone and ligaments and less pressure on the naviculair bursa. It gives this structure time to recuperate when the horse is in the stable or handwalked. Very often horses with severe injuries on the weight bearing apparatus of one leg are prone to get laminitis in the other due to the fact that the horse will try to carry more weight on the healthy leg. The sole support pad should therefore be used on both affected and non-affected legs as preventive measure.

US 2012/0279184 A1 discloses a sole support pad for hoofed animals.

### SUMMARY OF THE INVENTION

It is the object of the present invention to provide a sole support pad for hoofed animals suffering from laminitis and other foot problems.

It is also the object of the present invention to provide a sole support that becomes rigid or semi-rigid and strong to support loads.

It is another object of the present invention to provide sole support that can be applied to the sole of hoofed animals with or without shoes.

It is further the object of the present invention to provide sole support that directly moulds to the foot in a matter of seconds.

### BRIEF DESCRIPTION OF THE DRAWINGS

Figure 1 is a sole support pad showing expanded polystyrene balls coated with isocyanate resins; and
Figure 2 is an enlarged inset view of Figure 1.

### DETAILED DESCRIPTION OF THE INVENTION

The curable resins useful in this invention are resins which can be used to coat the expandable polystyrene balls 12 and which can then be cured to reinforce the ball material. The resin is curable to a crosslinked thermoset state. The preferred curable resins are fluids, i.e. composition having viscosities between about 5,000 cps and about 500,000 cps, preferably about 10,000 cps to about 100,000 cps.

The resin used in the sole support material of the invention is preferably any curable resin which will satisfy the functional requirements of a sole support. Obviously, the resin must be nontoxic in the sense that it does not give off significant amounts of toxic vapors during curing which maybe harmful to either the horse or the person applying the support and also that it does not cause skin irritation either by chemical irritation or the generation of excessive heat during cure. It should become rigid, or semi-rigid, and strong to support loads. Thus, the material must undergo a change of state from fluid-like condition to a solid condition in a matter of minutes.

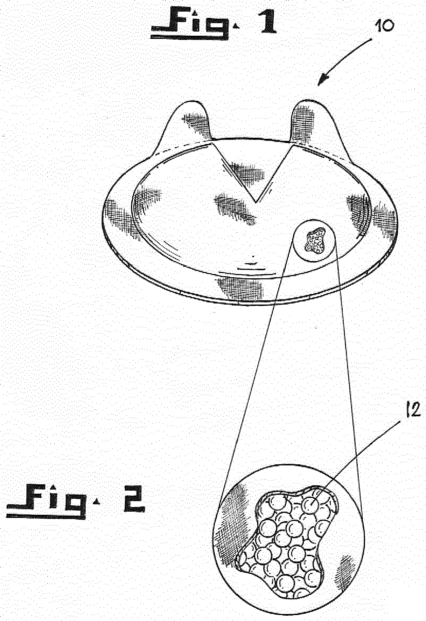

A shown in Figure 1 & 2, the sole support pad 10 made from curable resin-coating tiny expandable polystyrene balls 12 is said to be breathable which allows air to flow through the pad and prevents bacteria. The pad can be washed and reused for up to 14 to 30 days.

The resins are those cured with water. A number of classes of water-curable resins known in the art are suitable, including polyurethanes, cyanoacrylate esters, and, when combined with moisture sensitive catalysts, epoxy resins and prepolymers terminated at their ends with trialkoxy- or trihalo-silane groups.

Not according to the invention, resin systems other than those which are water-curable may be used, although the use of water to activate the hardening of a sole support is most convenient and safe. The resin is hardened upon wetting with solutions of a tertiary amine and anorganic peroxide.

The preferred resins for use in the present invention are water-curable, isocyanate-functional prepolymers. Suitable systems of this type are disclosed. The following disclosure relates primarily to the preferred embodiment of the invention wherein water-curable isocyanate-functional prepolymers are employed as the curable resin.

It is preferred to coat the resin onto the polystyrene balls as a polyisocyanate prepolymer formed by the reaction of an isocyanate and a polyol. It is preferred to use an isocyanate which has low volatility such as diphenylmethane diisocyanate (MDI) rather than more volatile material such as toluene diisocyanate (TDI). Suitable isocyanantes include 2,4-toluene diisocyanate, 2,6-toluene diisocyanate, mixtures of these isomers, 4,4'-diphenylmethane diisocyannate, 2,4'-dipheneylmethane diisocyanant, mixtures of these isomers together with possible small quantities of 2,2'-diphenylmethane diisocyanate (typical of commercially available diphenylmethane diisocyanante), and aromatic polyisocyanates and their mixtures such as those derived from phosgenation of the condensation product of aniline and formaldehyde. Typical polyols for use in the prepolymer system include polypropylene ether glycols polytretramethylene ether glycols; by using molecular weight polyols, the rigidity of the cured resin can be reduced.

A water curable isocyanate-functional polymer as used herein means a prepolymer derived from polyisocyanate, preferably aromatic, and a reactive hydrogen compound or oligomer. The prepolymer has sufficient isocyanate-functionality to cure upon exposure to water, e.g. moisture vapor or, preferably liquid water.

The polymer is then applied in a dry atmosphere i. e. in the absence of atmospheric moisture, to the balls. The coated balls are packaged in an inert atmosphere in a moisture impervious package to prevent contact with atmospheric pressure.

## Claims

1. A sole support pad (10) for hoofed animal suffering from laminitis or other foot problems **characterized in that** the sole support pad comprises water-curable resin coating expandable polystyrene balls (12), wherein the curable resins are fluids having viscosities of 5,000 cps to 500,000 cps.

2. A sole support according to claim 1 wherein the viscosity of the curable resins is 10,000 to 100,000 cps.

3. A sole support according to claim 1 wherein the water curable resin is polyisocyanate functional prepolymer selected from diphenylmethane diisocyanate (MD1), 2,4-toluene diisocyanate, 2,6-toluene diisocyanate, mixtures of these isomers, 4,4'-diphenylmethane diisocyannate, 2,4'- dipheneylmethane diisocyanant, mixtures of these isomers, 2,2'-diphenylmethane diisocyanate, and aromatic polyisocyanates and their mixtures such as those derived from phosgenation of the condensation product of aniline and formaldehyde.

4. A sole support pad according to claim 3 wherein the polyisocyanate is diphenylmethane diisocyanate.

5. A sole support pad according to claim 1 wherein the pad (10) is breathable which allows air to flow through the pad and prevent bacteria.

6. A sole support pad according to claim 1 wherein the pad (10) is washable and can be reused for a certain period.

7. A sole support according to claim 1 wherein the hoofed animal is horse.

8. A process for producing the sole support according to claim 1 comprising the steps of:
a. coating the polystyrene balls (12) with poly-isocyanate prepolymer under dry atmosphere ;
b. allowing isocyanate and polypol to react;
c. hardening the resin upon wetting with tertiary amine or organic peroxide solutions;
d. packaging coated balls in impervious package to prevent contact with atmospheric pressure.

9. A process according to claim 8 wherein the polyol is selected from polypropylene ether glycols or polytretramethylene ether glycols.

10. A sole support according to claims 1-3 wherein said support is applied to the sole of hoofed animals with or without shoes.

11. Use of the sole support according to claim 1-3 for horses with low deep digital flexor tendor lesions or problems associated with the naviculair bone, bursa and ligaments.

12. Use according to claim 11 wherein the sole support (10) is placed directly to the foot that directly moulds the foot

13. Use according to claim 11 wherein vettrap bandage is used help the support put in place in a matter of seconds.

## Patentansprüche

1. Sohlenstützunterlage (10) für ein Huftier, das an Hufrehe oder sonstigen Fußproblemen leidet, **dadurch gekennzeichnet, dass** die Sohlenstützunterlage Bälle (12) aus expandierbarem Polystyrol umfasst, die mit wasserhärtbarem Harz überzogen sind, wobei die härtbaren Harze Fluide mit Viskositäten von 5000 cP bis 500000 cP sind.

2. Sohlenstütze nach Anspruch 1, wobei die Viskosität der härtbaren Harze 10000 bis 100000 cP beträgt.

3. Sohlenstütze nach Anspruch 1, wobei das wasserhärtbare Harz funktionelles Polyisocyanat-Präpolymer ist, ausgewählt aus Diphenylmethandiisocyanat (MD1), 2,4-Toluoldiisocyanat, 2,6-Toluoldiisocyanat, Gemischen von diesen Isomeren, 4,4'-Diphenylmethandiisocyanat, 2,4'-Diphenylmethandiisocyanat, Gemischen von diesen Isomeren, 2,2'-Diphenylmethandiisocyanat und aromatischen Polyisocyanaten und deren Gemischen wie jenen, die aus der Phosgenierung des Kondensationsprodukts von Anilin und Formaldehyd abgeleitet sind.

4. Sohlenstützunterlage nach Anspruch 3, wobei das Polyisocyanat Diphenylmethandiisocyanat ist.

5. Sohlenstützunterlage nach Anspruch 1, wobei die Unterlage (10) atmungsaktiv ist, was Luft ermöglicht, durch die Unterlage zu strömen und Bakterien vorzubeugen.

6. Sohlenstützunterlage nach Anspruch 1, wobei die Unterlage (10) waschbar ist und für einen gewissen Zeitraum erneut verwendet werden kann.

7. Sohlenstütze nach Anspruch 1, wobei das Huftier ein Pferd ist.

8. Verfahren zur Herstellung der Sohlenstütze nach Anspruch 1, umfassend die Schritte:
a. Überziehen der Polystyrolbälle (12) mit Polyisocyanat-Präpolymer unter trockener Atmosphäre;
b. Reagierenlassen von Isocyanat und Polyol;
c. Härten des Harzes bei Befeuchten mit Lösungen von tertiärem Amin oder organischem Peroxid;
d. Verpacken beschichteter Bälle in undurchlässiger Verpackung, um Kontakt mit atmosphärischem Druck zu verhindern.

9. Verfahren nach Anspruch 8, wobei das Polyol aus Polypropylenetherglykolen oder Polytetramethylenetherglykolen ausgewählt ist.

10. Sohlenstütze nach Ansprüchen 1-3, wobei die Stütze auf die Sohle von Huftieren mit oder ohne Hufeisen aufgebracht wird.

11. Verwendung der Sohlenstütze nach Anspruch 1-3 für Pferde mit Läsionen der unteren tiefen digitalen Beugesehne oder Problemen, die mit Kahnbein, Bursa und Bändern assoziiert sind.

12. Verwendung nach Anspruch 11, wobei die Sohlenstütze (10), die sich direkt an den Fuß anschmiegt, unmittelbar am Fuß platziert wird.

13. Verwendung nach Anspruch 11, wobei Vettrap-Bandage verwendet wird, um ein Platzieren der Stütze innerhalb von Sekunden zu unterstützen.

## Revendications

1. Patin de support de semelle (10) pour ongulés soufrant d'une laminite ou d'un autre problème de pied, **caractérisé en ce que** le patin de support de semelle comprend des billes en polystyrène expansible à revêtement résine durcissable à l'eau (12), dans lequel les résines durcissables sont des fluides présentant des viscosités comprises entre 5000 cps et 500000 cps.

2. Support de semelle selon la revendication 1, dans lequel la viscosité des résines durcissables est comprise entre de 10000 et 100000 cps.

3. Support de semelle selon la revendication 1, dans lequel la résine durcissable à l'eau est un prépolymère fonctionnel de polyisocyanate sélectionné parmi diisocyanate de diphénylméthane (MD1), diisocyanate de 2,4-toluène, diisocyanate de 2,6-toluène, des mélanges desdits isomères, diisocyanate de 4,4'-diphénylméthane, diisocyanate de 2,4'-diphénylméthane, des mélanges desdits isomères, diisocyanate de 2,2'-diphénylméthane, et des polyisocyanates aromatiques et leurs mélanges tels que ceux dérivant de la phosgénation du produit de la condensation de l'aniline et du formaldéhyde.

4. Patin de support de semelle selon la revendication 3, dans lequel le polyisocyanate est du diisocyanate de diphénylméthane.

5. Patin de support de semelle selon la revendication 1, dans lequel le patin (10) est respirant, ce qui permet à de l'air de circuler à travers le patin et d'éviter les bactéries.

6. Patin de support de semelle selon la revendication 1, dans lequel le patin (10) est lavable et peut être réutilisé pendant un certain temps.

7. Support de semelle selon la revendication 1, dans lequel l'ongulé est un cheval.

8. Procédé permettant de produire le support de semelle selon la revendication 1, comprenant les étapes consistant à :
a. revêtir les billes de polystyrène (12) avec un prépolymère de polyisocyanate dans une atmosphère sèche ;
b. laisser réagir l'isocyanate et le polyol ;
c. durcir la résine par mouillage avec des solutions d'amine tertiaire ou de peroxyde organique ;
d. conditionner les billes revêtues dans un conditionnement imperméable afin d'empêcher un contact avec la pression atmosphérique.

9. Procédé selon la revendication 8, dans lequel le polyol est sélectionné parmi des éthers de polypropylène glycol ou des éthers de polytétraméthylène glycol.

10. Support de semelle selon l'une quelconque des revendications 1 à 3, dans lequel ledit support est appliqué sur la semelle d'ongulés équipés ou dépourvus de sabots.

11. Utilisation du support de semelle selon l'une quelconque des revendications 1 à 3 pour des chevaux présentant des lésions basses du tendon fléchisseur profond du doigt ou des problèmes associés à l'os naviculaire, à la bourse synoviale, et aux ligaments.

12. Utilisation selon la revendication 11, dans laquelle le support de semelle (10) est placé directement sur le pied et épouse directement le pied.

13. Utilisation selon la revendication 11, dans laquelle un bandage Vettrap est utilisé pour aider à mettre le support en place en quelques secondes.
